(19) Europäisches Patentamt
European Patent Office
Office européen des brevets

(11) **EP 0 814 123 A1**

(12) **EUROPÄISCHE PATENTANMELDUNG**

(43) Veröffentlichungstag:
29.12.1997 Patentblatt 1997/52

(51) Int. Cl.⁶: $C08L\ 21/00$, $C08K\ 3/36$, $B60C\ 1/00$

(21) Anmeldenummer: 97109369.5

(22) Anmeldetag: 10.06.1997

(84) Benannte Vertragsstaaten:
AT BE CH DE DK ES FI FR GB GR IE IT LI LU MC NL PT SE

(30) Priorität: 19.06.1996 DE 19624432

(71) Anmelder: Vianova Resins GmbH
55252 Mainz-Kastel (DE)

(72) Erfinder:
• Sattelmeyer, Richard, Dr.
65187 Wiesbaden (DE)
• Wallenwein, Siegfried
64572 Büttelborn (DE)
• Burkhart, Thomas, Dr.
55124 Mainz (DE)

(54) **Kiesselsäurehaltige Kautschukmischungen**

(57) Kautschukzubereitungen enthaltend mindestens einen unpolaren Kautschuk (A), mindestens einen polaren Kautschuk (E), mindestens ein Phenolharz (F), mindestens ein Verstärkungsadditiv (B), feinteiliges Siliciumdioxid (C) sowie übliche Zusatzstoffe (D), mit einem mechanischen Verlustfaktor tan δ bei 0 °C von mindestens 0,3 und bei 70 °C von höchstens 0,15, herstellbar durch mehrstufiges Vermischen, wobei die Vulkanisationsmittel und -beschleuniger erst in der letzten Stufe zugefügt werden.

**Beschreibung**

Für die Anwendung in den Laufflächen von Reifen werden Kautschukmischungen benötigt, die nach ihrer Vulkanisation einen niedrigen Rollwiderstand und einen hohen Rutschwiderstand aufweisen. Insbesondere die Erzielung eines hohen Naßrutschwiderstandes ist ohne gewisse Einbußen beim Rollwiderstand sehr schwer zu erreichen. Aufgrund des Zusammenhangs dieser Eigenschaften mit dem viskoelastischen Verhalten der Gummimischungen ist es wünschenswert, gleichzeitig einen möglichst hohen mechanischen Velustfaktor tan $\delta$ bei 0 °C (für hohen Naßrutschwiderstand) und einen möglichst niedrigen Wert für tan $\delta$ bei 50 bis 70 °C (für niedrigen Rollwiderstand) einzustellen.

In der EP-A 0 501 227 wird der Einsatz von in Lösung polymerisiertem Styrol-Butadien-Kautschuk (SBR) mit Kieselsäure und einem Verstärkungsadditiv für die Füllstoff-Inkorporation vorgeschlagen, wobei Ruß als Füllstoff vermieden werden soll. Die Verwendung von Lösungs-SBR-Polymerisaten, Kieselsäure und Verstärkungsadditiv haben auch die EP-A 0 447 066, EP-A 0 638 610 und EP-A 0 623 650 zum Inhalt, jedoch werden dabei SBR-Polymere mit jeweils unterschiedlichen strukturellen Merkmalen (cis-1,4-Gehalt, Styrol-Gehalt) verwendet. In der EP-A 0 646 621 sind sowohl in Lösung polymerisierte als auch in Emulsion polymerisierte SBR-Kautschuke zusammen mit Kieselsäure, einem Verstärkungsadditiv und gegebenenfalls Ruß für den Einsatz in Laufflächen beschrieben. In keiner dieser Patentanmeldungen werden Mischungen von unpolaren Kautschuken mit polaren Kautschuken wie z.B. NBR-Kautschuk, Polyurethan-Kautschuk oder chlorsulfoniertem Polyäthylen erwähnt.

In der EP-A 0 563 710 wird der Einsatz von Kautschukmischungen vorgeschlagen bestehend aus unpolaren und polaren Kautschuken, Phenolharzen und üblichen Zusatzstoffen, wobei als Füllstoff stets Ruß, gegebenenfalls in Kombination mit anderen Füllstoffen, verwendet wird. Im Vergleich zu Kautschukmischungen aus unpolaren Kautschuken allein läßt sich zwar entweder der Verlustfaktor bei 0 °C erhöhen oder der Verlustfaktor bei höherer Temperatur (50 bzw. 70 °C) erniedrigen, jedoch lassen sich nicht gleichzeitig beide Werte in der gewünschten Richtung ändern.

Überraschenderweise wurde nun gefunden, daß sich Kautschukmischungen mit gleichzeitig hohem tan $\delta$ bei 0 °C und niedrigem tan $\delta$ bei 70 °C herstellen lassen, die auf dem gemeinsamen Einsatz von unpolaren und polaren Kautschuken, Phenolharzen, Kieselsäure und geringen Mengen von Verstärkungsadditiven basieren. Die vorliegende Erfindung beschreibt derartige Stoffkombinationen.

Die Erfindung betrifft daher eine Kautschukzubereitung bestehend aus mindestens einem unpolaren Kautschuk (A), mindestens einem polaren Kautschuk (E), mindestens einem Phenolharz (F), mindestens einem Verstärkungsadditiv (B), feinteiligem Siliciumdioxid (C) sowie üblichen Zusatzstoffen (D).

Die erfindungsgemäßen Kautschukzubereitungen weisen vorzugsweise einen mechanischen Verlustfaktor tan $\delta$ bei 0 °C von mindestens 0,3 und bei 70 °C von höchstens 0,15 auf.

Unter unpolarem Kautschuk (A) wird im folgenden ein Kautschuk verstanden, der keine polaren Gruppierungen enthält und durch Polymerisation von solchen Monomermischungen erhalten wird, die zu mindestens 90 % aus Monomeren bestehen, die nur Kohlenstoffatome und Wasserstoffatome enthalten. Bevorzugt besteht die unpolare Kautschuk-Komponenten aus Polymerisaten oder Copolymerisaten von ein- oder mehrfach olefinisch ungesättigten Kohlenwasserstoffen, wobei mindestens ein Massenanteil von 10 % der eingesetzten Monomeren mindestens zwei olefinische Doppelbindungen aufweist.

Geeignete unpolare Kautschuktypen (A) sind beispielsweise Naturkautschuk (NR), Styrol-Butadien-Kautschuk (SBR), Polybutadien (BR), Polyisopren (IR), Transpolyoctenylenkautschuk, Butylkautschuk (IIR), Äthylen-Propylen-Dien-Terpolymer-Kautschuk (EPDM) und deren Gemische, wie sie gewöhnlich in der Reifenindustrie oder zur Herstellung technischer Gummiwaren verwendet werden. Styrol-Butadien-, Butadien-, Isopren- und Naturkautschuk oder Mischungen dieser Kautschuktypen mit untergeordneten Mengen an anderen Kautschuktypen sind bevorzugt. Sie können in beliebiger Form, zum Beispiel als Ballen oder Pulver bzw. als Masterbatch mit Ruß vorgemischt, Anwendung finden.

Die als Verstärkungsadditive (B) verwendbaren Silane enthalten leicht abspaltbare Gruppen, vorzugsweise Alkoxygruppen, durch deren Abspaltung eine Reaktion mit den Hydroxylgruppen der Kieselsäure möglich ist. Diese Reaktion führt in der Kautschukmischung zu einer Viskositätssenkung und Verbesserung der Verarbeitbarkeit sowie auch zu einem günstigeren Vulkanisationsverhalten und zur Verbesserung der mechanischen Prüfwerte wie Härte, Spannungswert und Abriebwiderstand. Bei Vorliegen von zusätzlichen sulfidischen funktionellen Gruppen bewirken derartige Silane die Bildung von chemischen Bindungen zu den Polymermolekülen, so daß dadurch eine Vernetzungsreaktion zwischen Kieselsäurefüllstoff und Kautschuk über das Silan ermöglicht wird. Geeignete Substanzen sind z. B. Bis-(3-triäthoxysilylpropyl)-tetrasulfon (Handelsname Si 69) und 3-Thiocyanatopropyltriäthoxysilan (Handelsname Si 264), die in Form von Flüssigkeiten von Degussa AG auf dem Markt angeboten werden. Für eine leichtere Handhabung ist das Produkt Si 69 auch in einer Abmischung im Verhältnis 1 : 1 mit Ruß unter der Bezeichnung X 50 S erhältlich. Darüber hinaus können Alkoxygruppen enthaltende Silane auch an Polymermoleküle gebunden sein und in dieser Form als Verstärkungsadditiv dienen.

Die Kieselsäuren (C) werden vorzugsweise nach dem Fällungsverfahren hergestellt und haben eine spezifische Oberfläche von 100 bis 250, vorzugsweise 120 bis 180 m²/g. Handelsübliche Produkte sind ®Ultrasil VN 2 und VN 3 von Degussa AG oder ®Hi-Sil 210 und 243 von PPG Inc. Derartige Kieselsäuren benötigen den Zusatz von Silanen, die als Komponente (B) der erfindungsgemäßen Mischungen beschrieben wurden. Es werden aber auch Kieselsäuren angeboten, die bereits mit einem Silan modifiziert sind und daher keine Zumischung des Silans erfordern. Solche modifizierten Kieselsäuren, z. B. mit der Bezeichnung ®Coupsil von Degussa AG, können für die erfindungsgemäßen Mischungen ebenfalls verwendet werden, wobei dann aber die Komponente (B) in der Kieselsäure (C) enthalten ist und nicht mehr getrennt zugegeben zu werden braucht.

Übliche Zusatzstoffe (D) sind sonstige Füllstoffe, Vulkanisationsmittel, Beschleuniger, Aktivatoren, Wachse, Alterungsschutz- und Verarbeitungshilfsmittel sowie Weichmacher, wie zum Beispiel Mineralöle. Als Füllstoff kann neben der Kieselsäure auch Ruß Einsatz finden. Er ist jedoch kein zwingend vorgeschriebener Bestandteil der erfindungsgemäßen Mischungen, obwohl er zu einer Verbesserung der Eigenschaften während der Verarbeitung und beim fertigen Vulkanisat führen kann. Die Vulkanisation in Gegenwart von Schwefel ist bevorzugt, kann aber auch ohne Schwefel mit Vulkanisationsharzen erfolgen. Ihr Verlauf kann durch Auswahl geeigneter, in der Kautschuktechnologie üblicher Beschleuniger, Aktivatoren und Regler den praktischen Erfordernissen angepaßt werden.

Polare Kautschuke (E) sind Polymerisate oder Copolymerisate von olefinisch ungesättigten Verbindungen, wobei mindestens ein Massenanteil von 20 % der eingesetzten Monomeren jeweils mindestens eine polare Gruppe tragen muß. Polare Gruppen im Sinne dieser Erfindung sind Gruppen, die in Verbindung mit einem gesättigten aliphatischen Kohlenstoffatom ein Dipolmoment von mindestens $0,5 \cdot 3,336 \cdot 10^{-30}$ C$\cdot$m (0,5 Debye) aufweisen, ausgewählt aus der Carbonsäure-Ester-Gruppe, der Nitrilgruppe, der Sulfonsäure(chlorid)-Gruppe, der Urethangruppe, der Chloralkylgruppe und der Alkylenoxygruppe. Eine Aufzählung der verwendbaren polaren Kautschuke ist in EP-A 0 563 710 zu finden. Gut geeignet ist z. B. Nitrilkautschuk (NBR), im Handel beispielsweise unter den Markennamen ®Krynac oder ®Perbunan N, Hersteller Bayer AG, oder ®Hycar, Hersteller B. F. Goodrich Chemical Co., erhältlich. Auch Mischungen verschiedener polarer Kautschuktypen, zum Beispiel verschiedener Nitrilkautschuke sind einsetzbar. Weiterhin können zusätzlich modifizierte Produkte angewendet werden wie z. B. Nitrilkautschuke, welche Carboxyl- oder Amin- bzw. Vinyl- oder Hydroxylgruppen enthalten oder deren olefinische Doppelbindungen hydriert wurden.

Der polare Kautschuk kann in üblicher Lieferform vorliegen und bei dem erfindungsgemäßen Verfahren entweder direkt in die Kautschukmischung eingearbeitet oder als Modifizierungsmittel in einer anderen Mischungskomponente enthalten sein. Der Massenanteil der polaren Kautschuke in der Mischung kann, bezogen auf die Summe der Massen sämtlicher Kautschuktypen, 0,1 bis 29 %, vorzugsweise 0,5 bis 19 %, und insbesondere bevorzugt 1,0 bis 15 % betragen.

Geeignete Harze (F) sind alle nicht selbsthärtenden Phenolharze wie Phenolnovolake, Mehrkernphenole oder parasubstituierte Resole. Auch monomere Phenole, wie zum Beispiel Alkylphenole, können eingesetzt werden, jedoch ist deren Verwendung aus Gründen des Gesundheits- und Umweltschutzes nicht empfehlenswert. Vorzugsweise geeignet sind Novolakharze, zum Beispiel solche aus Phenol und/oder mehrwertigen Ein- oder Mehrkernphenolen wie Resorcin oder Bisphenolen (zum Beispiel Diphenylolpropan) und/oder aus substituierten ein- oder mehrwertigen Phenolen, wie Alkyl- oder Aralkylphenolen mit zum Beispiel 1 bis 20, vorzugsweise 4 bis 18 C-Atomen im Substituenten, wie tert. Butylphenol, Octylphenol, Pentylphenol, Cashew-Nußschalenöl sowie Novolakharze auf der Basis von styrolisiertem oder mit Fettsäuren, wie Leinölfettsäuren, modifiziertem Phenol oder Phenylphenol. Die Herstellung der Phenolnovolake durch Reaktion des Phenols oder des Gemisches von Phenolen mit den Aldehyden, wie Acetaldehyd oder Butyraldehyd, vorzugsweise aber Formaldehyd, erfolgt im sauren Medium gemäß dem Stand der Technik. Die Novolake können auch weichmachende Anteile, wie Polyäthylenglykole, Tallöl oder andere übliche Plastifiziermittel enthalten. Die Phenolharze können außerdem mit Naturharzen wie Kolophonium oder Tallharz sowie mit Terpenen modifiziert sein, wobei der Naturharzanteil in speziellen Fällen auch mengenmäßig überwiegen kann. Nichthärtende Resole werden aus parasubstituierten Alkylphenolen, wie paratert.-Butylphenol oder para-Octylphenol und Formaldehyd nach dem Stand der Technik hergestellt. Der eingesetzte Massenanteil an Phenolharzen bzw. an der Summe von Phenolharzen mit Weichmachern und/oder Naturharzen beträgt, bezogen auf die Summe der Massen sämtlicher Kautschuktypen ist 0,01 bis 14 %, vorzugsweise 0,02 bis 11 % und insbesondere bevorzugt 0,05 bis 7 %.

Die Erfindung betrifft daher weiter die Herstellung von kieselsäurehaltigen Kautschukmischungen auf der Basis eines oder mehrerer unpolarer Kautschuktypen (A) ausgewählt aus der Gruppe Naturkautschuk, Polyisopren, Polybutadien, Styrol-Butadien-, Styrol-Isopren- und EPDM-Kautschuk; eines Verstärkungsadditivs (B) aus der Verbindungsklasse der Silane zur Bildung von chemischen Bindungen innerhalb der Kieselsäurepartikel und zwischen Kieselsäure und Kautschuk; von Kieselsäure (C); sowie weiterer üblicher Zusatzstoffe (D); wobei der Kautschukmischung vor dem Einmischen des Schwefels und der Vulkanisationsbeschleuniger mindestens ein polarer Kautschuk (E) und mindestens ein Phenolharz (F) zugemischt werden.

Die erfindungsgemäßen Mischungen können in üblicher Weise in Innenmischern oder auf Mischwalzen hergestellt werden. Zur Erzielung einer guten Einarbeitung und Erreichung optimaler Vulkanisateigenschaften empfiehlt sich die Durchführung eines mindestens dreistufigen Mischprozesses. Dabei werden in der ersten Stufe der unpolare Kautschuk (A), der polare Kautschuk (E), das Verstärkungsadditiv (B) und das Siliciumdioxid (C) sowie gegebenenfalls ein Teil des Weichmacher-Öls, falls ein solches als Komponenten (D) verwendet wird, bei Temperaturen von 100 bis 170 °C gemischt, anschließend nach Abkühlen auf eine Temperatur unter 100 °C in der zweiten Stufe oder weiteren Stufen die Mischung der ersten (bzw. vorigen) Stufe mit dem Phenolharz (F) und Zusatzstoffen (D) mit Ausnahme von Schwefel und Vulkanisationsbeschleunigern vermischt und auf eine Temperatur von 100 bis 170 °C erwärmt, und anschließend in der letzten Stufe bei einer Temperatur von 60 bis 120 °C, bevorzugt bei 70 bis 110 °C, und besonders bevorzugt bei 80 bis 120 °C die Mischung der vorigen Stufe gemeinsam mit Schwefel und Vulkanisationsbeschleunigern unter Durchmischung erwärmt. Dabei betragen die Mischzeiten in der ersten Stufe 5 bis 20 Minuten, in der zweiten und gegebenenfalls weiteren Stufen 2 bis 25 Minuten und in der letzten Stufe 3 bis 30 Minuten.

Mit Ausnahme des Vulkanisationssystems, bestehend aus Schwefel und Beschleunigern, können auch die übrigen Komponenten wie Phenolharz, Füllstoffe, Verarbeitungshilfsmittel wie zum Beispiel Zinkoxid und Stearinsäure, Alterungsschutzmittel und Wachse in der ganzen Menge oder zum Teil bevorzugt in der ersten Mischstufe eingearbeitet werden, andernfalls erfolgt deren Zusatz in der ganzen Menge oder der restlichen Anteile in der nächsten Stufe des Mischprozesses. Nach Beendigung der ersten Stufe des Mischvorgangs, die bei Temperaturen oberhalb von 100 °C durchgeführt wird, und in deren Verlauf auch höhere Temperaturen bis zu 170 °C erreicht werden können, läßt man den Ansatz auf eine Temperatur von 100 °C oder darunter abkühlen und führt dann die Reaktion der zweiten Stufe durch. In dieser Stufe wird wieder bei Temperaturen von mindestens 100 °C gearbeitet, es können erneut Temperaturen bis 170 °C auftreten, worauf erneut abgekühlt wird. Falls es die Erzielung einer optimalen Dispergierung erforderlich macht, läßt man einen oder mehrere analoge Mischstufen im selben Temperaturbereich nachfolgen. Anschließend wird in der letzten Mischstufe das Vulkanisationssystem (Schwefel, Beschleuniger und gegebenenfalls. Verzögerer) bei einer Temperatur unter 120 °C, vorzugsweise unter 100 °C, besonders bevorzugt zwischen 80 und 100 °C, eingemischt und die weitere Verarbeitung gemäß der üblichen Arbeitsweise durchgeführt.

Im Bedarfsfall kann zu einer unvulkanisierten erfindungsgemäßen Mischung eine zweite Kautschukmischung mit davon abweichender Zusammensetzung zugemischt und die so erhaltene Gesamtformulierung in der letzten Mischstufe weiterverarbeitet werden.

Die erfindungsgemäß erhaltenen Mischungen können außer als Laufflächen für Fahrzeugreifen auch für andere Zwecke verwendet werden, beispielsweise für technische Gummiwaren wie Dämpfungselemente, Gummimanschetten, Beläge, Dichtungen oder Förderbänder. Dabei können die Mischungen in Schichten aufgetragen werden, die eine gute Haftung zu eingelegten Festigkeitsträgern wie Geweben oder Geflechten haben müssen. Zur Verbesserung der Haftung können Haftvermittler wie Kobalt- oder anderen Metallverbindungen zugesetzt werden.

Die nachfolgend beschriebenen Versuche dienen zur Erläuterung der Zusammensetzung und der Eigenschaften der erfindungsgemäßen Gummimischungen. Bei diesen dreistufigen Versuchsreihen wurden in der ersten Mischstufe die unpolaren Kautschuke mit dem polaren Kautschuk und der Kieselsäure, dem Silan-Verstärkungsadditiv, Öl, Phenolharz, den weiteren Füllstoffen, Alterungsschutzmittel, Zinkoxid, Stearinsäure und gegebenenfalls Wachs bei Temperaturen zwischen 100 und 170 °C gemischt. In der zweiten Stufe erfolgte eine Temperaturbehandlung von 7 min bei ca. 130 °C und anschließend in der letzten Stufe bei einer Temperatur von 80 bis 100 °C die Einarbeitung des Vulkanisationssystems.

An den unvulkanisierten Proben wurde die Mooney-Plastizität nach DIN 53 523 und außerdem das Vulkanisationsverhalten mit einem Monsanto-Vulkameter bestimmt.

Nach der Vulkanisation, durchgeführt unter den bei der jeweiligen Versuchsserie angegebenen Bedingungen, wurden die erhaltenen Probekörper auf folgende Eigenschaften nach den in der Praxis üblichen Methoden untersucht:

- Reißfestigkeit, Reißdehnung und Spannungswerte (bei 10 % bis 300 % Dehnung) gemäß DIN 53 504,
- Härte Shore A nach DIN 53 505,
- Rückprallelastizität nach DIN 53 512 und
- Bestimmung von G', G" und $\delta$ mit dem Rheometrics Dynamic Analyzer RDA 700.

Die in den folgenden Tabellen genannten Gummimischungen enthielten neben den dort angegebenen Komponenten folgende übliche Zusatzstoffe:

| 2,0 GT | Stearinsäure |
|---|---|
| 3,0 GT | Zinkoxid |
| 1,5 GT | N-isopropyl-N'-phenyl-p-phenylendiamin* |
| 0,8 GT | Poly-2,2,4-trimethyl-1,2-dihydrochinolin* |
| 1,4 GT | Schwefel |
| 1,6 GT | Benzothiazol-2-cyclohexylsulfenamid** |
| 1,8 GT | Diphenylguanidin** |
| (GT: Gewichtsteile auf je 100 Gewichtsteile der Kautschukmischung) ||

\* als Alterungsschutzmittel
\*\* als Beschleuniger

Die Masse $m_i$ der eingesetzten Additive wird stets auf die Summe der Masse aller in der Mischung vorhandenen Kautschuk-Komponenten $m_K$ bezogen, die Angabe der Massenanteile $a_i$ des i-ten Additivs bedeutet daher

$$a_i = \frac{m_i}{m_K}$$

dabei bedeutet die Einheit "GT" "g / 100 g" oder "kg / 100 kg".

In den Beispielen bedeuten alle relativen Mengenangaben und Gehaltsangaben in % stets Massenanteile.

**Beispiele**

**Versuchsreihe 1 (Beispiel A und Vergleichsversuche Verfahren 1 und Verfahren 2)**

Als SBR-Kautschuk wurde ein in Emulsion polymerisiertes handelsübliches Produkt der Typklasse 1712 mit einem Gehalt von 27 % aromatischem Mineralöl eingesetzt. Zu dieser Basiskomponente wurde Polybutadien (BR) der Handelsmarke ®Buna CB 10 (Hersteller: Bayer AG) und ein NBR-Kautschuk mit 34 % Acrylnitrilgehalt (34 ACN, Typ ®Krynac 34.80, Hersteller: Bayer AG) zugemischt. Bei den Vergleichsversuchen erfolgte anstelle der Zumischung des NBR-Kautschuks die Zugabe der gleichen Menge eines in Emulsion polymerisierten SBR-Kautschuks vom Typ 1500. Als Kieselsäure diente ein nach dem Fällungsverfahren hergestelltes handelsübliches Produkt (®Ultrasil VN 3, Hersteller: Degussa AG) und als Verstärkungsadditiv ein handelsübliches Silan, das als Gemisch 1 : 1 mit Ruß N 330 unter der Bezeichnung X 50 S im Handel erhältlich ist (Hersteller: Degussa AG). Beim Vergleichsversuch Verfahren 1 ohne Zugabe des Additivs X 50 S wurde die entsprechende Rußmenge (5 GT) separat zugesetzt. Das Phenolharz A war ein handelsüblicher Phenolnovolak ®Alnovol PN 320 (Hersteller: Hoechst AG) mit einem Schmelzbereich von 79 bis 89 °C/Kapillar-Verfahren DIN 53 181, einem Erweichungsbereich von 108 bis 120 °C/Methode Ring und Kugel DIN ISO 4625 und einer Viskosität der 50 %igen Lösung in 1-Methoxypropanol-2 bei 23 °C von 1400 bis 2200 mPas nach DIN 53 177.

Beispiel A liegt hinsichtlich der mechanischen Eigenschaften auf dem für Laufflächenmischungen geforderten Niveau und zeigt darüber hinaus gegenüber Verfahren 1 und Verfahren 2 eine vorteilhaft hohe Winkelkerbzähigkeit. Der Verlustfaktor tan δ erreicht bei 0 °C deutlich höhere Werte als die Vergleichsversuche, was auf einen höheren Naß-rutschwiderstand schließen läßt. Da tan δ bei 70 °C niedrig ist, folgt hieraus auch ein geringer Rollwiderstand. Vergleichsversuch Verfahren 1 ohne Zusatz von Silan-Additiv zeigt aufgrund des hohen Mooney-Wertes eine schlechte Fließfähigkeit bzw. Verarbeitbarkeit der unvulkanisierten Mischung sowie schlechte mechanische Eigenschaften des Vulkanisats wie niedrige Spannungswerte und niedrige Härten, was durch die mangelhafte Dispergierung der Kieselsäure bedingt ist. Auch die viskoelastischen Eigenschaften sind sehr ungünstig, was aus den Werten von tan δ hervorgeht. Vergleichsversuch Verfahren 2 entspricht dem Stand der Technik und führt zu annähernd gleich guten Verarbeitungs- und mechanischen Eigenschaften wie Beispiel A, mit Ausnahme einer niedrigen Winkelkerbzähigkeit. Bei 0 °C ist jedoch bei Verfahren 2 der Wert für tan δ deutlich niedriger als bei A, so daß Beispiel A einen eindeutigen Vorteil hinsichtlich des Naßrutschwiderstandes aufweist.

**Versuchsreihe 2 (Beispiele B und C sowie Vergleichsversuche Verfahren 3 und Verfahren 4)**

Unter Einsatz der gleichen Kautschuktypen und Füllstoffe wie in Versuchsreihe 1 wurden hier Mischungen mit den Novolaken B und C mit analogen Versuchen ohne Zusatz von Novolak (Verfahren 3 und Verfahren 4) verglichen. Novolak B war ein handelsübliches Produkt auf Resorcin-Basis ($^{®}$Alnovol VPN 1755, Hersteller: Hoechst AG) mit einem Schmelzpunkt von ca. 90 °C/Kapillar-Verfahren DIN 53 181, einem Erweichungspunkt von ca. 120 °C/Methode Ring und Kugel DIN ISO 4625 und einer Viskosität der 50 %igen Lösung in 1-Methoxypropanol-2 bei 23 °C von ca. 500 mPas nach DIN 53 177. Novolak C war ein Zweikernphenol, das als Bisphenol F im Handel erhältlich ist. Aus den Versuchsergebnissen sind die guten verarbeitungstechnischen, mechanischen und viskoelastischen Eigenschaften der Beispiele B und C deutlich zu erkennen. Demgegenüber ist Vergleichsversuch Verfahren 3 in praktisch allen Punkten ungünstiger zu beurteilen. Verfahren 4 weist gegenüber den Beispielen B und C einen niedrigeren Wert für tan $\delta$ bei 0 °C und eine niedrigere Winkelkerbzähigkeit auf. Vorteilhaft ist Darüber hinaus bei B und C die Tatsache, daß das Maximum von tan $\delta$ nahe bei 0°C liegt und nicht bei so tiefen Temperaturen wie bei V3 und V4.

| Versuchsreihe 1 | | | | |
|---|---|---|---|---|
| **Versuch** | | | A | V1 | V2 |
| E-SBR 1712 | | 68 | 68 | 68 |
| BR | | 20 | 20 | 20 |
| NBR (34 ACN) | | 12 | -- | -- |
| E-SBR 1500 | | -- | 12 | 12 |
| Kieselsäure | | 55 | 55 | 55 |
| Silan-Additiv X 50 S | | 10 | -- | 10 |
| Ruß N 330 | | -- | 5 | -- |
| Novolak A | | 1,5 | -- | -- |
| Mooney-Plast./L1+4/120°C | ME | 52 | 102 | 46 |
| Vulkanisation bei 155°C | min | 20 | 30 | 20 |
| **mechanische Prüfwerte** | | | | |
| Reißfestigkeit | MPa | 22 | 21 | 22 |
| Reißdehnung | % | 499 | 822 | 488 |
| Spannungswert | 10% D | MPa | 0,6 | 0,5 | 0.5 |
| | 100% D | MPa | 2,4 | 1,0 | 2,3 |
| | 300% D | MPa | 10 | 2,8 | 11 |
| Winkelkerbzähigkeit | N/mm | 59 | 36 | 25 |
| Härte Shore A | 23 °C | E | 68 | 59 | 64 |
| | 70 °C | E | 64 | 57 | 62 |
| Rückprallelast. | 23 °C | % | 33 | 36 | 44 |
| | 70 °C | % | 51 | 42 | 57 |
| **viskoelastische Daten** | | | | |
| Torsionsmodul G* | 0 °C | | 13,8 | 5,4 | 6,3 |
| | 20 °C | | 7,6 | 4,2 | 5,1 |
| | 70 °C | | 4,9 | 3,5 | 3,9 |
| Verlustmodul G" | 0° C | | 4,6 | 1,2 | 1,2 |
| | 20 °C | | 1,5 | 0,9 | 0,7 |
| | 70 °C | | 0,6 | 0,6 | 0,4 |
| Verlustfaktor tan δ | 0 °C | | 0,36 | 0,24 | 0,19 |
| | 20 °C | | 0,21 | 0,21 | 0,15 |
| | 70 °C | | 0,12 | 0,19 | 0,10 |

| Versuchsreihe 2 | | | | | | |
|---|---|---|---|---|---|---|
| **Versuch** | | | **B** | **C** | **V3** | **V4** |
| E-SBR 1712 | | | 68 | 68 | 68 | 68 |
| BR | | | 20 | 20 | 20 | 20 |
| NBR (34 ACN) | | | 12 | 12 | 12 | 12 |
| Kieselsäure | | | 55 | 55 | 55 | 55 |
| Silan-Additiv X 50 S | | | 10 | 10 | -- | 10 |
| Ruß N 330 | | | -- | -- | 5 | -- |
| Novolak B | | | 1,5 | -- | -- | -- |
| Novolak C | | | -- | 1,5 | -- | -- |
| Mooney-Plast./L1+4/120°C | | ME | 51 | 51 | 103 | 52 |
| Vulkanisation bei 155°C | | min | 20 | 20 | 20 | 20 |
| **mechanische Prüfwerte** | | | | | | |
| Reißfestigkeit | | MPa | 25 | 23 | 21 | 21 |
| Reißdehnung | | % | 545 | 524 | 756 | 463 |
| Spannungswert | 10% D | MPa | 0,6 | 0,6 | 0,5 | 0,6 |
| | 100% D | MPa | 2,5 | 2,4 | 1,2 | 2,5 |
| | 300% D | MPa | 11 | 10 | 4,0 | 11 |
| Winkelkerbzähigkeit | | N/mm | 29 | 59 | 35 | 23 |
| Härte Shore A | 23 °C | E | 67 | 67 | 61 | 68 |
| | 70 °C | E | 63 | 64 | 59 | 65 |
| Rückprallelast. | 23 °C | % | 32 | 33 | 34 | 35 |
| | 70 °C | % | 49 | 54 | 46 | 55 |
| **viskoelastische Daten** | | | | | | |
| Torsionsmodul G* | 0 °C | | 11,0 | 10,6 | 7,0 | 9,6 |
| | 20 °C | | 6,9 | 6,5 | 5,4 | 6,8 |
| | 70 °C | | 4,6 | 4,5 | 4,5 | 4,8 |
| Verlustmodul G" | 0 °C | | 3,6 | 3,6 | 1,7 | 2,8 |
| | 20 °C | | 1,4 | 1,3 | 0,9 | 1,2 |
| | 70 °C | | 0,5 | 0,5 | 0,6 | 0,5 |
| Verlustfaktor tan δ | 0 °C | | 0,34 | 0,36 | 0,25 | 0,29 |
| | 20 °C | | 0,20 | 0,20 | 0,17 | 0,19 |
| | 70 °C | | 0,12 | 0,11 | 0,13 | 0,11 |
| Maximum tan δ | | ° C | -6 | -6 | -11 | -11 |

**Patentansprüche**

1. Kautschukzubereitungen enthaltend mindestens einen unpolaren Kautschuk (A), mindestens einen polaren Kautschuk (E), mindestens ein Phenolharz (F), mindestens ein Verstärkungsadditiv (B), feinteiliges Siliciumdioxid (C) sowie übliche Zusatzstoffe (D).

2. Kautschukzubereitungen nach Anspruch 1, dadurch gekennzeichnet, daß die Kautschuke (A) Polymerisate von Monomeren sind, von denen ein Massenanteil von mindestens 90 % nur aus Kohlenstoff- und Wasserstoffatomen besteht.

3. Kautschukzubereitungen nach Anspruch 1, dadurch gekennzeichnet, daß die Kautschuke (A) Polymerisate von Monomeren sind, von denen ein Massenanteil von mindestens 10 % mindestens zwei olefinische Doppelbindungen enthält.

4. Kautschukzubereitungen nach Anspruch 1, dadurch gekernzeichnet, daß die polaren Kautschuke (E) Polymerisäte von Monomeren sind, von denen ein Massenanteil von mindestens 20 % mindestens je eine polare Gruppe trägt, wobei unter polaren Gruppen solche verstanden werden, deren Bindung an einem durchweg einfach gebundenen aliphatischen Kohlenstoffatom ein Dipolmoment von mindestens $1{,}668 \cdot 10^{-30}$ C $\cdot$ m aufweist.

5. Kautschukzubereitungen nach Anspruch 1, dadurch gekennzeichnet, daß der Massenanteil an unpolaren Kautschuken 71 bis 99,9 %, und der Massenanteil an polaren Kautschuken in der Kautschukmischung 0,1 bis 29 % beträgt.

6. Kautschukzubereitungen nach Anspruch 1, dadurch gekennzeichnet, daß die spezifische Oberfläche des feinteiligen Siliciumdioxids (C) 100 bis 250 $m^2$/g beträgt.

7. Kautschukzubereitungen nach Anspruch 1, dadurch gekennzeichnet, daß die Phenolharze (F) zu einem Massenanteil, bezogen auf die Summe der Massen der Kautschukanteile, von 0,01 bis 14 % in der Mischung zugegen sind.

8. Verfahren zur Herstellung von Kautschukmischungen nach Anspruch 1, dadurch gekennzeichnet, daß in einem mindestens dreistufigen Verfahren zuerst der unpolare Kautschuk (A), der polare Kautschuk (E), das Verstärkungsadditiv (B) und das Siliciumdioxid (C) bei Temperaturen von 100 bis 170 °C gemischt werden, anschließend nach Abkühlen auf eine Temperatur unter 100 °C in der zweiten Stufe oder weiteren Stufen die Mischung der ersten (bzw. vorigen) Stufe mit dem Phenolharz (F) und Zusatzstoffen (D) mit Ausnahme von Schwefel und Vulkanisationsbeschleunigern vermischt und auf eine Temperatur von 100 bis 170 °C erwärmt wird, und anschließend in der letzten Stufe bei einer Temperatur von 60 bis 120 °C, bevorzugt bei 70 bis 110 °C, und besonders bevorzugt bei 80 bis 120 °C die Mischung der vorigen Stufe gemeinsam mit Schwefel und Vulkanisationsbeschleunigern unter Durchmischung erwärmt wird.

9. Verfahren nach Anspruch 8, dadurch gekennzeichnet, daß die Mischzeiten in der ersten Stufe 2 bis 20 Minuten, in der zweiten und gegebenenfalls weiteren Stufen 2 bis 25 Minuten und in der letzten Stufe 3 bis 30 Minuten betragen.

10. Verwendung von Kautschukzubereitungen nach Anspruch 1 zur Herstellung von Laufflächen für Reifen.

Europäisches
Patentamt

**EUROPÄISCHER RECHERCHENBERICHT**

Nummer der Anmeldung

EP 97 10 9369

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| D,X | EP 0 563 710 A (HOECHST AG) 6.Oktober 1993 <br> * Seite 3, Zeile 22; Ansprüche * <br> --- | 1-10 | C08L21/00 <br> C08K3/36 <br> B60C1/00 |
| D,A | EP 0 501 227 A (MICHELIN & CIE) 2.September 1992 <br> * Ansprüche * <br> ----- | 1,6,8 | |

RECHERCHIERTE SACHGEBIETE (Int.Cl.6)

C08L
C08K
B60C

Der vorliegende Recherchenbericht wurde für alle Patentansprüche erstellt

| Recherchenort | Abschlußdatum der Recherche | Prüfer |
|---|---|---|
| DEN HAAG | 29.September 1997 | Van Humbeeck, F |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)